# EUROPEAN PATENT SPECIFICATION

(11) **EP 2 163 709 B1**
(45) Date of publication and mention of the grant of the patent: **10.10.2012**
(21) Application number: 08016081.5
(22) Date of filing: 12.09.2008
(51) Int. Cl.: E04F 15/12

(54) **Method for installing a floor covering and agent for treating an underlying surface for such method**
Verfahren zum Verlegen eines Fussbodenbelags und Mittel zur Behandlung eines Untergrundes für dieses Verfahren
Procédé pour l'installation d'un revêtement de sol et agent pour le traitement d'une surface sous-jacente pour ce procédé

(43) Date of publication of application: 17.03.2010
(73) Proprietor: Flooring Industries Limited, SARL, 8070 Bertrange (LU)
(72) Inventor: Vanhastel, Luc, 8700 Tielt (BE); Tack, Filip, 1000 Lausanne (CH)
(74) Representative: Schacht, Benny Marcel Corneel

(56) References cited:
- EP-A- 0 753 489
- WO-A-98/51637
- US-A- 5 366 550

## Description

The present invention relates to a method for installing a floor covering, as well as to an agent for treating an underlying surface, which can be applied in such method.

In particular, the invention relates to a method for installing a floor covering consisting of hard floor panels, such as it is the case with solid parquet, veneer parquet, laminate parquet, or parquet consisting of so-called "engineered wood", which means that such parquet comprises a wear layer of several millimeters of solid wood provided on a core layer, which also is wood-based and may consist of a MDF or HDF substrate (Medium Density Fiberboard or High Density Fiberboard) or of spruce wood or the like.

It is known that such floor coverings can be installed floatingly, wherein a connection is realized at the edges of the floor panels concerned and the thus formed whole is not connected to the underlying surface. Said connection may consist of glued-together classic tongue and groove connections, such as the connections known, amongst others, from US 4,095,913, or of coupling means provided in each other, which can effect a mechanical connection between the floor panels concerned. Such coupling means are known, for example, from WO 97/47834 and, when two of such floor panels are coupled, result in a locking in a vertical direction perpendicular to the plane of the coupled floor panels as well as in a horizontal direction perpendicular to the coupled edges and in the plane of the coupled floor panels, such that these floor panels can not or almost not shift away from each other. Such floating placement of floor panels, and then in particular the glue-free installation by means of mechanical coupling means, can be performed by any do-it-yourselfer in a simple manner. Due to the fact that with a floating installation of such floor panels, there is no direct connection to the underlying surface, it is possible that air chambers are present or will occur between the underside of the installed floor panels and this underlying surface. These air chambers are undesired, as they lead to a sound experienced as annoying when the floor covering is being walked upon. In order to remedy this, already many suggestions have been made, such as, for example, using a separate sound-absorbing layer beneath the floor covering, providing a sound-absorbing layer, for example, of polyethylene, at the underside of each floor panel, such as in WO 01/96688, or integrated in each floor panel, such as in US 2003/033777. Although each suggestion as such reduces the sound production considerably, in some applications, for example, for usage in an apartment building, the user requests an even better sound reduction.

It is known that such floor covering can also be glued to the underlying surface. In such method, usually the underlying surface is made dust-free and, if necessary, is leveled. This means that a self-leveling agent, for example, egaline, is poured or spread on the underlying surface in order to fill up possible uneven places and to form a flat and horizontal, more particularly level, surface. Such self-leveling agents are described, for example, in WO 2008/077510 or EP 1 634 911 and are self-leveling in that, when being poured, they flow easily and therefore form a flat horizontal surface by themselves. Mostly, a leveling layer of 2 to 4 millimeters is sufficient for leveling a concrete subfloor. After solidifying such agent substantially or entirely, which may take up to 24 hours depending on the thickness of the agent, the floor panels are glued onto the underlying surface one by one by means of parquet glue. Herein, the parquet glue is spread onto the leveled underground by means of a scoop or glue comb, in a quantity which is sufficient for placing, for example, several floor panels or one or more rows of such floor panels. Possible excess parquet glue, which is pushed upward along the mutually adjoining edges of the individual floor panels, must be removed as soon as possible. After drying of the parquet glue, the floor covering can be put into service. The sound production with such flat-glued floor panels is minimal; however, the method for the installation thereof is cumbersome and requires a sophisticated specialized knowledge, such that this installation manner is not suited for the average do-it-yourselfer.

WO 98/51637 discloses a self-levelling agent that, after its solidification, adheres to a subfloor. The planarity of the solidified agent is such that no additional preparation is needed prior to laying the floor covering.

US 5,366,550 also discloses a self-levelling agent that, after its solidification, adheres to a subfloor.

The present invention aims at a method for installing a floor covering, which is less cumbersome and possibly can be performed by a do-it-yourselfer in a simple manner, however, wherein the final sound production is comparable to that of the flat-glued floor panels of the state of the art. To this aim, the invention relates to a method for installing a floor covering, wherein this floor covering is connected to an underlying surface and wherein this method comprises at least the steps of preparing the underlying surface at least by spreading or pouring thereupon a self-leveling agent and of realizing a connection between the leveled underlying surface and the floor covering concerned after said agent substantially has solidified, with the characteristic that said connection is created at least by the intermediary of the spread self-leveling agent itself, in that this agent or a portion thereof, after substantial or complete solidification, shows an adhesive effect, whether or not after this agent or the respective portion thereof has been activated and in that said self-leveling agent shows said adhesive effect at least at the surface thereof, whether or not after this surface has been activated.

Due to the fact that by means of the self-leveling agent an adhesive effect can be obtained, it is no longer necessary to apply extra parquet glue. Due to the fact that the adhesive effect occurs at least partially by means of a leveled agent, automatically a good distribution of the adhesive can be obtained.

According to the invention, said self-leveling agent shows said adhesive effect at least at the surface thereof, whether or not after this surface has been activated. In this manner, the adhesive effect is directly usable for realizing the connection with the floor panels.

Preferably, the adhesive effect of such self-leveling agent is concentrated at the surface or the upper portion of the solidified and possibly activated agent or is present solely there. In this manner, automatically a good dosage of the adhesive agent may be obtained at this surface, such that the removal of excess adhesive agent is not necessary. Preferably, such sticky surface layer has a thickness which is smaller than 0.2 millimeters and still better is smaller than 0.1 millimeters, such that the risk that the surface of the floor covering deviates from the horizontal or level surface, for example, because it sinks into the still sticky mass, is limited.

An increased concentration of the adhesive effect at the surface of the solidified self-leveling substance may be obtained, for example, when the respective adhesive or component of the adhesive agent system concerned is pushed upward after pouring or spreading this substance and whether or not after a possibly actuation. Such pushing upward may be obtained, for example, when the adhesive agent or component has a considerably lower specific density than the majority of the remaining ingredients of the self-leveling substance and as a result hereof forms a phase of the leveling layer which is situated on top thereof, and/or when the adhesive or component repels the majority of the remaining ingredients of the self-leveling substance and/or when the adhesive or other component is forced upward by a material present or created in the self-leveling agent. In this latter case, this may relate, for example, to a gas created as a by-product of the solidification of the self-leveling agent. Such increased concentration may also occur when the adhesive effect at the surface is activated by the influence of a second or further component or by exposure to the environment.

Preferably, said self-leveling agent, after having substantially solidified, has at least at the surface thereof a not-adhering layer, which has to be activated for obtaining said adhesive effect or, as aforementioned, has to be degraded. The presence of such not-adhering layer is user-friendly when installing the floor covering and prevents that any adhesive effect already present disappears or is diminished by the influence of, for example, dust.

In the case that the self-leveling agent after solidifying already would show an adhesive effect at the surface thereof by itself, then auxiliary means, such as synthetic film and the like, may be applied when installing the floor covering. Herein, films consisting of PTFE (PolyTetraFluoroEthene) or comprising such material at their surface are recommended for protecting the leveling layer from the person installing the floor. Herein, there are various possibilities. Either the film is spread at least over the to-be-walked-on surface of the self-leveling layer and gradually removed again as the floor covering is installed, or the installing person partially is protected by such film from the self-leveling layer, for example, because his feet and/or the lower part of his legs and/or his hands and/or forearms are surrounded by such film.

Also, the underside of the floor panel or floor panels concerned may be protected at least temporarily from the adhesive effect of the self-leveling agent, for example, in that a removable film is provided at the underside of the floor panels, said film being attached to the panel in a simply removable manner, for example, similar to the protective film known from DE 103 54 789.

In order to achieve the above-mentioned features, said spread self-leveling agent, after substantially having solidified, may comprise, according to a preferred embodiment, at least at the surface thereof at least one component of an adhesive agent system consisting of several components. Adhesive agent systems consisting of two or more components are known as such. For example, two-component adhesives on the basis of epoxy resin, polyurethane, resorcinol, or other epoxy, phenolic, acrylate, cyanoacrylate and polyurethane glues are known in a variety of applications. With a polyurethane glue, the combination of an alcohol with isocyanate results in effecting a polyurethane adhesive connection. According to the present preferred embodiment, one of the components of an above-mentioned two- or multi-component adhesive can be blended into a leveling agent known as such, for example, into one of the agents described in WO 2008/077510, and in particular can be blended into a preferably anhydride agent comprising polyoxyalkylenes and/or chalk powder prior to spreading or pouring said agent onto the underlying surface. After pouring and preferably after substantial solidification of the self-leveling agent, the adhesive effect for attaching the floor covering can be activated by adding the second component.

It is clear that in the case of the above preferred embodiment said activation preferably consists at least in that at least one of said several components is brought into contact with said surface. This contact may be performed by providing at least one of said several components separately on said surface of the spread self-leveling agent or on a portion of this surface, such that said activation occurs at least partially prior to the installation of the floor covering or floor panels themselves. According to another possibility, the contact may occur in that said floor covering or floor panels are provided with at least one of said several components at their underside, such that said activation occurs at least partially when installing the floor covering or floor panels themselves. In this last case, for example, a so-called "no-mix glue" can be applied, such as an acrylate glue.

In the case of such two- or multi-component adhesive system, it is also possible that one or more components are present in the environment. Thus, for example, the presence of humid air in some systems also may result in a chemical reaction resulting in an adhesive effect. Examples of glues taking the second component from the environment are urethanes, silicones and cement glue.

According to another preferred embodiment, said self-leveling agent may comprise a glue or one or several components of an adhesive agent system, said activation of which is performed at least partially after the respective portion of the floor covering already has been provided on the spread and substantially solidified self-leveling agent. For example, glues may be applied with an anaerobic reaction. This means that the glue reacts when lacking oxygen. It is also possible to apply glue which solidifies or polymerizes by means of UV or electron radiation. By a device especially provided to this aim, such radiation can be transmitted through the already installed floor covering or a portion thereof. It is also possible that the activation occurs by pressing on the floor covering, for example, solely by walking thereupon, or by stimulating it with sound waves, for example, ultrasonic or subsonic sound waves, or by putting it under load in any other manner.

As aforementioned, said activation, according to the above-mentioned preferred embodiment, can be performed by post-treating the installed floor covering or a portion thereof at least partially with heat or electro-magnetic radiation, such as UV radiation.

It is clear that the method of the invention preferably is applied for installing a floor covering consisting of hard floor panels. As aforementioned, this may relate to hard floor panels of a solid parquet, a veneer parquet, a laminate parquet, or a parquet consisting of so-called "engineered wood", which means that such parquet comprises a wear layer of several millimeters of solid wood provided on a core layer, which also is wood-based and may consist of a MDF or HDF substrate (Medium Density Fiberboard or High Density Fiberboard) or of spruce wood or the like.

Preferably, said hard floor panels have a rectangular shape and are provided with coupling means at least at two opposite edges, however, preferably at all opposed edges. In that case, the method preferably comprises at least the step of interconnecting at least two of such floor panels by means of said coupling means. Preferably, the coupling means concerned allow at least at two opposite edges, and preferably at all opposite edges, effecting a locking with a similar floor panel in a vertical direction perpendicular to the plane of the coupled floor panels, as well as in a horizontal direction perpendicular to the coupled edges and in the plane of the coupled floor panels.

Preferably, the floor panels can be coupled at least at one pair of opposite edges by means of a substantially vertical or downward movement of the floor panels concerned, more particularly the respective edges thereof, towards each other. The possibility of connecting the floor panels at least at two pairs of opposite edges with a downward movement minimizes the performance of flat movements over the possibly already adhering underlying surface.

For realizing a connection by means of a downward movement, in the case of oblong floor panels, at the short edges a so-called "drop" or a so-called "push-lock" connection system can be applied, wherein in the first case only a locking in horizontal direction is obtained and in the second case a connection both in said horizontal and in said vertical direction is obtained. For an example of a "drop" connection system, reference is made to GB 356,270; for examples of so-called "push-lock" connection systems, reference is made to US 6,966,161, DE 2004 012 582, DE 10 2007 002 590 and WO 2007/015669. Whether or not in combination therewith, preferably at the long edges of such oblong floor panels a connection system is applied allowing a coupling by means of a rotational movement of two of such floor panels around the respective edge. Such coupling means, which moreover allow obtaining a locking in horizontal direction as well as in vertical direction between two of such floor panels, are known as such, for example, from WO 97/47834.

According to an independent aspect, the invention also relates to an agent which is particularly suitable for performing the above-mentioned method. To this end, the invention relates to an agent for treating an underlying surface, wherein this agent, when being spread on the underlying surface concerned, shows a self-leveling effect, **characterized in that** said agent comprises one or more components of an adhesive agent system, wherein this adhesive agent system allows obtaining at least an adhesive effect at the surface of the spread agent, after the agent concerned substantially is solidified.

As above-mentioned, the adhesive agent system preferably consists of several components, wherein at least one component lacks in said agent or is present therein in an insufficient amount, such that said adhesive effect would be created or would be sufficiently large for connecting a floor covering with the treated underlying surface.

It is clear that various possible embodiments of such agent already have been discussed by means of the self-levelling agent mentioned in connection with the method. These embodiments here also have to be considered preferred embodiments of said independent aspect.

As already mentioned, a practical embodiment of the self-leveling agent of the invention substantially can be composed of a self-leveling agent known to those skilled in the art, such as the agents known from the aforementioned WO 2008/077510 or the EP 1 634 911, to which an adhesive agent or a component of an adhesive agent system has been added. Preferably, the agent comprises 10 to 50 weight percent of fillers selected from the series of gypsum, cement and putty, wherein gypsum and/or cement is particularly suitable for leveling a concrete subfloor and putty is more suitable for leveling a wooden subfloor. Preferably, it is opted for an adhesive or a component with a relatively low viscosity, preferably with a viscosity smaller than 5000 mPas at 25°C, or still better even smaller than 3000 mPas. Such low viscosity can be found, for example, in glues on the basis of methacrylate esters, urethane, methacrylate, epoxy or cyanoacrylate.

To the person skilled in the art, it is known how the flow characteristics of such agent can be adapted. For example, water, lime, casein and/or cellulose can be added until the desired characteristics are obtained.

With the intention of better showing the characteristics of the invention, hereafter, as an example without any limitative character, several preferred embodiments are described, with reference to the accompanying drawings, wherein:
Figure 1 in perspective schematically represents a step from a method with the characteristics of the invention;
Figure 2, at a larger scale, represents a cross-section according to the line II-II represented in figure 1;
Figure 3, in the same view, represents a portion of the further process of the method;
Figure 4, at a larger scale, represents a view on the area indicated by F4 in figure 2;
Figures 5 and 6, at a larger scale, represent views on the area indicated by F5 in figure 3, wherein figure 6 relates to a variant;
Figure 7, in a view similar to that of figure 1, represents a further step in a method according to the invention;
Figures 8 and 9, at a larger scale, represent cross-sections according to the line VIII-VIII and IX-IX, respectively, represented in figure 7, wherein figure 9 also relates to a variant of the floor panel of figure 8; and
Figure 10, in the same view as figure 8, represents a variant.

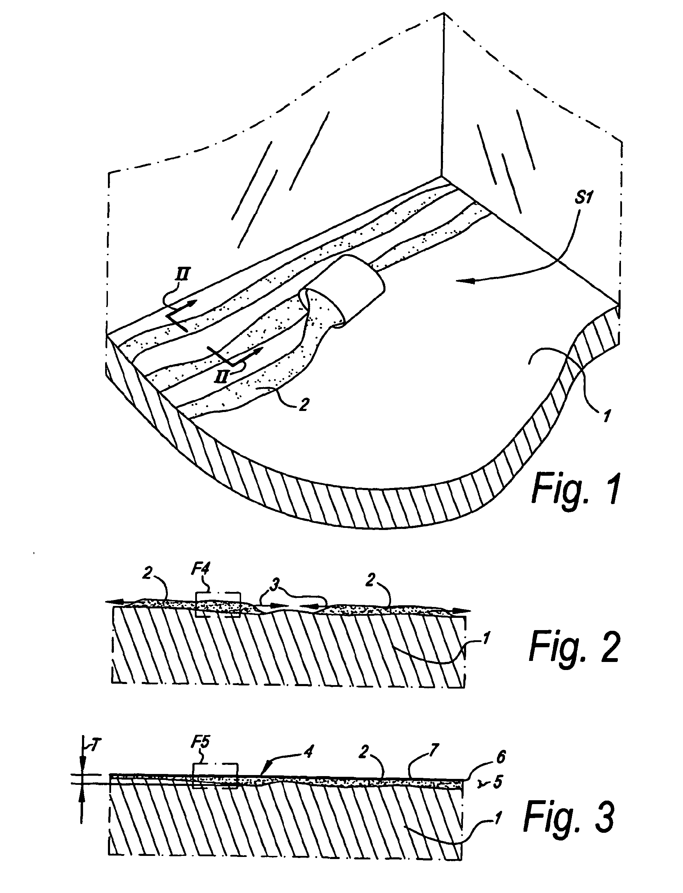

Figure 1 shows the step S1 in a method according to the invention, wherein the underlying surface 1 is prepared at least by spreading thereupon a self-leveling agent 2. Here, it is shown that the self-leveling agent 2 is poured on the underlying surface 1, where it then, as schematically represented in figure 2 by arrows 3, flows out by itself. It is clear that this spreading or pouring can be performed in any manner. For example, the agent may also be applied manually by means of a doctor blade or other scoop. With large surfaces, possibly a pump may be applied bringing the self-leveling agent 2 to the desired location by means of a set of hoses.

Figure 3 shows that after the flowing out of the self-leveling agent 2 a horizontal level surface 4 can be obtained. It is noted that the average thickness T of such self-leveling layer 5 can be limited to several millimeters, for example, to a maximum of 4 or 5 millimeters, when one starts from a concrete subfloor 1 or a tiled subfloor 1 in normal condition.

After the flowing out of the self-leveling agent 2, preferably a drying time of several hours up to several days is respected, such that the self-leveling layer 5 can solidify at least substantially. According to the invention, the method further also comprises the step of realizing a connection between the leveled subfloor 1 and the respective floor covering after said solidification substantially has taken place.

The particularity of the invention is that said connection is created at least by the intermediary of the self-leveling agent 2 itself. Figure 3 schematically shows that to this aim, according to the example, an adhering layer 6 is created at least at the surface 4 of the self-leveling layer 5 after said substantial solidification, or at least a layer 6 is created with which an adhesive effect can be obtained.

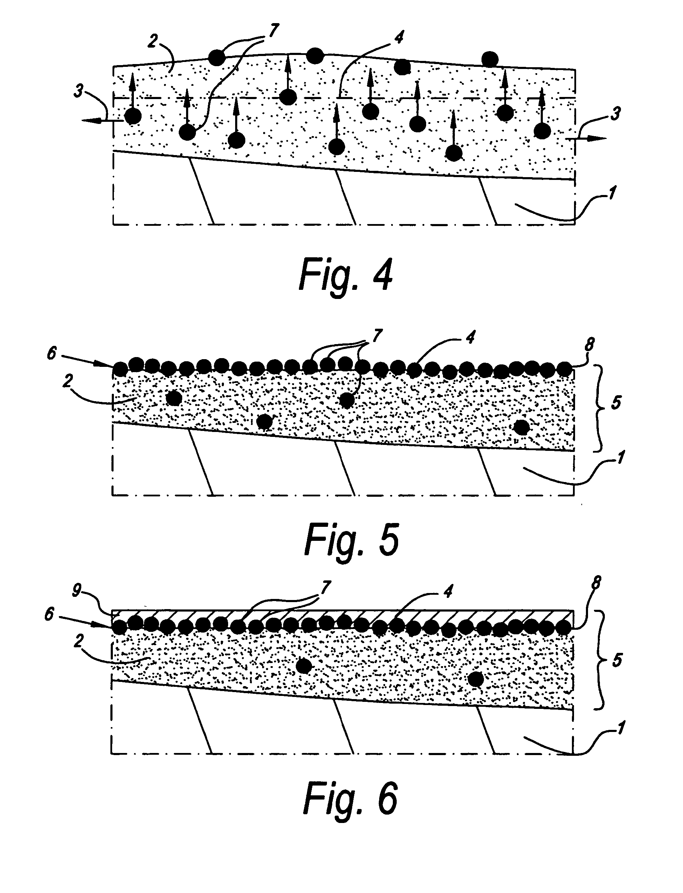

Figure 4 schematically shows a possible operative principle for realizing such adhering layer 6 at the surface 4 of a self-leveling agent 2. Herein, this relates to a mechanism where the adhesive 7 or a component of an adhesive agent system has a lower specific density than the remaining portion of the self-leveling agent 2. After pouring or otherwise spreading the self-leveling agent 2, the respective component or adhesive 7 is pushed upward and this component or adhesive 7, or at least a portion thereof, is floating on top.

Figure 5 shows that this component or adhesive 7 forms a preferably separate phase 8 at the surface 4 of the self-leveling layer 5, after the latter has substantially solidified. Thereby, at the surface 4 or in the upper half of the self-leveling layer 5 at least an increased concentration of said component or adhesive 7 is obtained. It is clear that, if, as aforementioned, a component of an adhesive agent system consisting of several components is concerned, this component as such does not necessarily have to show an adhesive effect, however, that according to the invention it suffices that such adhesive effect can be obtained with the activation by means of the remaining components. With an adhesive, it is also possible that the adhesive effect is created only after the activation thereof, for example, by the influence of electro-magnetic radiation, such as UV radiation, or by humidifying.

Figure 6 shows a variant wherein the adhesive 7 or component thereof is situated beneath the surface 4 of the self-leveling layer 5 or, in other words, is situated beneath a top layer 9 of this self-leveling layer 5. In this case, the adhesive 7 or component also is concentrated beneath this top layer 9. Such embodiment can be obtained, for example, when the self-leveling agent 2 also comprises a material which is more light-weight than said adhesive 7 or component thereof. For reaching the adhesive 7 or component in order to realize the connection with the floor covering 10, such top layer 9 then first must be degraded or modified. Preferably, such top layer 9 as such does not show any adhesive effect after the self-leveling agent 2 has solidified substantially or entirely. Such characteristic results in an agreeable working environment for the person installing the floor and provides for that a possible protection of the self-leveling layer 5 by means of films or the like is redundant.

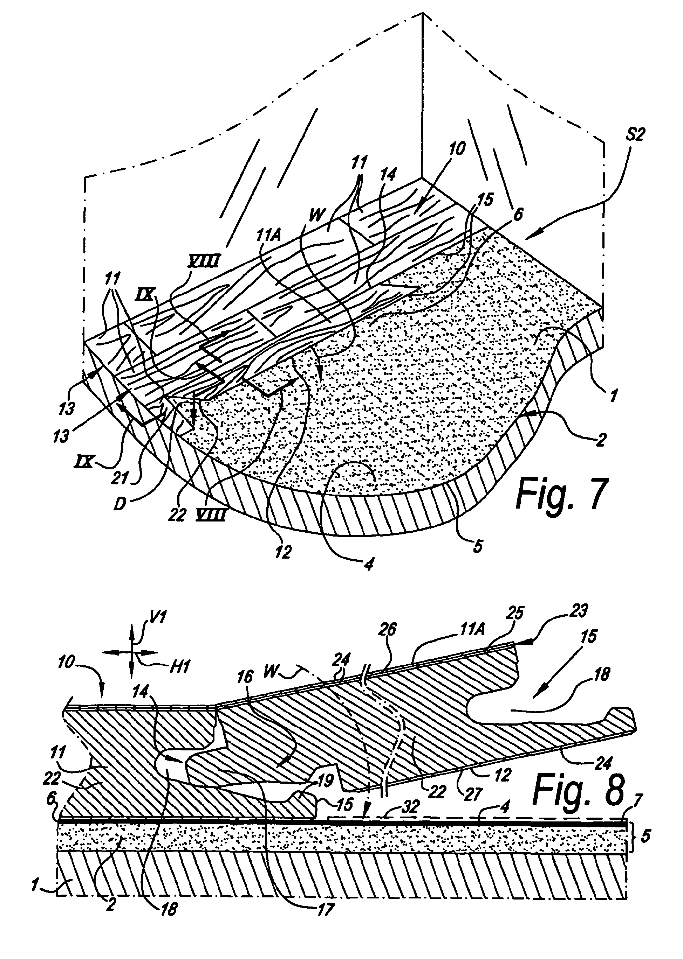

Figure 7 shows the aforementioned step in which a connection is realized between the leveled underlying surface and the floor covering 10. In this case, this relates to a floor covering composed by means of hard floor panels 11. In the represented example of this method, said connection is obtained when installing the floor panels 11 themselves or immediately thereafter. This means that in the example no post-treatment of the floor covering 10 or floor panels 11 is required, albeit the fact that possibly a drying time may be required. Thus, the example relates to the case in which said adhesive effect of the self-leveling layer 5 is present before installation or is created when installing the floor panels 11. From the introduction and the above description, it is clear that, when the self-leveling layer 5 after the substantial solidification thereof as such shows no or hardly an adhesive effect, it is possible that this layer 5 must be activated in a separate step. This separate activation step can be performed prior to the installation of the floor covering 10 or a portion thereof and may consist, for example, in applying an activator or another component on the leveled underlying surface 1. It is noted that such activation step does not necessarily have to be performed separately, as it may also be performed simultaneously with the installation of the respective floor panel 11, for example, in that this floor panel 11 is provided, at the underside 12 thereof, with such component or activator.

As aforementioned, the floor covering 10 of figure 7 consists of hard floor panels 11, more particularly of hard floor panels 11 for a parquet floor, wherein the floor panels 11 concerned are installed in parallel rows 13. It is clear that other installation patterns, such as herringbone patterns or the like, are possible, too. Figure 7 shows how a floor panel 11 can be connected to the already placed portion of the floor covering 10. To this aim, at least one of the long edges 14-15 of the new floor panel 11A is connected to the long edge 15 of one or several floor panels 11 from an already at least partially installed row 13 of such floor panels 11.

Figure 8 shows that in the example the connection of the long edges 14-15 concerned takes place by coupling together mechanical coupling means 16 provided at these edges 14-15. The coupling means 16 concerned allow obtaining among the floor panels 11-11A a mutual locking in a vertical direction V1 as well as in a horizontal direction H1. To this aim, the coupling means 15 substantially have the shape of a tongue 17 and a groove 18 and moreover are provided with locking parts 19, which prevent a drifting-apart of the floor panels 11-11A in a horizontal direction H1. The represented coupling means 16 allow to form the locking or coupling by providing the tongue panel 11A in the groove panel 11 with a turning movement W around the respective edges 14-15 to be coupled. It is also possible to provide the groove panel 11 in the tongue panel 11A by means of a similar movement. The represented coupling means 16 also allow that the panels 11-11A can be interconnected by shifting them towards each other in a substantially horizontal direction H1. In this latter case, a temporary elastic deformation of the groove 18 takes place, such that the tongue 19 can be provided therein.

Preferably, at least one of the short edges 20-21 of the new floor panel 11A is connected to an already installed floor panel 11. This connection may be performed before, during as well as simultaneously with the connection of the long edges 17-18. To this aim, coupling means 16 similar to the coupling means 16 of the long edges 14-15 can be applied. From the state of the art, various methods are known for interconnecting floor panels having such mechanical coupling means at all edges. As an example, reference is made to EP 1 167 653, EP 1 223 264, EP 1 428 957 and EP 1 793 064.

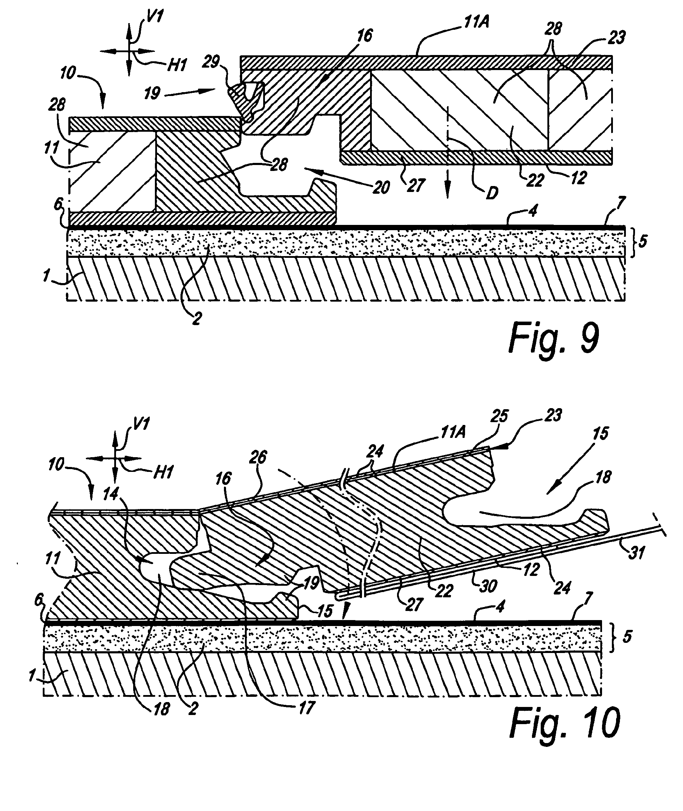

According to a preferred variant, the coupling means 16 at the short edges 20-21 allow to form a connection by means of a substantially downward or vertical movement D. Figure 9 shows that to this aim, coupling means 16 of the so-called "push-lock" type can be applied. Then, the connection at the short edges 20-21 can be obtained automatically when the floor panel 11A is coupled at the long edges 14 to the preceding row 13 by means of said turning movement W. By this turning movement W, also automatically a downward movement D is obtained at the short edge 20.

It is noted that the presence of coupling means 16 at least at one pair of opposite edges 14-15, and preferably at all edges 14-15-20-21, which allow a locking at least in horizontal direction H1, has the advantage that when installing the floor covering 10, no tensioning devices have to be applied in order to counteract the occurrence of undesired joints between the individual floor panels 11-11A or in order to keep a good alignment among the floor panels 11 of the same row 13. It is clear that the occurrence of height differences among the individual floor panels 11-11A can be counteracted by means of coupling means 16 realizing at least a locking in vertical direction V1 among two of such floor panels 11-11A. This latter is the case with coupling means 16 substantially made as a tongue 17 in groove 18 connection.

Further, it is noted that the floor panel 11A represented in figure 8 is of another type than the floor panel 11A represented in figure 9. The floor panel 11A of figure 8 relates to a floor panel 11A of a laminate parquet, whereas the floor panel 11a of figure 9 relates to a floor panel 11A consisting of so-called "engineered wood".

The floor panel 11A of figure 8 substantially consists of a wood-based core 22, which in this case consists of MDF or HDF, with a top layer 23 provided on top, on the basis of one or more paper layers 24 provided with synthetic material. In this case, the top layer 23 comprises both a printed paper sheet forming a so-called decor layer 25, and a transparent or translucent paper sheet forming a protective layer 26 or a so-called overlay and is provided above the decor layer 25. At the underside 12 of the floor panel 11A, a backing layer 27 or balancing layer is provided, which also consists of a paper sheet provided with resin. The coupling means 16 are substantially and here even completely made in one piece with said core material 22. For example, they may be milled into it.

The floor panel of figure 9 substantially consists of a wood-based core 22, which in this case is composed of several portions 28, upon which a wooden top layer 23 is provided, which possibly also is protected by one or more finishing layers, for example, lacquer layers, which are not represented here. At the underside 12 of the floor panel 11A, a wooden backing layer 27 is provided. The coupling means represented here are made only partially in one piece with said core 22. Namely, for obtaining said locking in vertical direction V1 a locking portion 29 is provided made of another material, preferably synthetic material. Such locking portions 29 are described, for example, in DE 20 2008 008 597 U1.

Figure 10 shows a floor panel 11A, wherein a removable film 30 is provided at the underside 12. Such film 30 can be applied when it is useful to delay the adhesive effect of the self-leveling layer 5 or the activation thereof until the desired moment, for example, until the floor panel 11A concerned has attained its final position in the floor covering 10 and, for example, is connected at a long edge 14 as well as at a short edge 20 to other floor panels 11 of the floor covering 10. From that moment, the film 30 can be removed from beneath the respective floor panel 11A, for example, by pulling at the protruding portion 31 thereof, and the underside 12 of the floor panel 11A can be brought into contact with the self-leveling layer 5.

Possibly, one may wait with the removal of said film 30 until the respective row 13 of floor panels 11 is completed.

When the floor panel 11A of figure 10 is provided at its underside 12 with an activating component for the adhesive 7 or component comprised in the self-leveling layer 5, an embodiment is obtained which forms an example of an activation which is performed after the installation of the floor panel 11A concerned. Such activation thus will start only with the removal of said film 30. Other examples hereof relate to activation by treatment of the installed floor covering 10 or a portion thereof, for example, by UV or heat treatment.

Figure 8 also shows with the dashed line 32 that a film may be temporarily provided on the underlying surface 1, wherein this film is functioning analogous to the removable film 30 at the underside 12 of the floor panel 11A of figure 10. Such film, as the aforementioned kind, may consist of synthetic material, such as PTFE.

It is clear that the above-described agents also form examples of the aforementioned independent aspect.

The present invention is in no way limited to the above-described embodiments, however, such methods and agents applied therewith may be realized according to various variants, without leaving the scope of the present invention, as defined by the appended claims.

## Claims

1. Method for installing a floor covering, wherein this floor covering (10) is connected to an underlying surface (1) and wherein this method comprises at least the steps (S1-S2) of preparing the underlying surface (1) at least by spreading thereupon a self-leveling agent (2) and of realizing a connection between the leveled underlying surface (1) and the floor covering (10) concerned after said agent (2) substantially has solidified, **characterized in that** said connection is created at least by the intermediary of the spread self-leveling agent (2) itself, **in that** this agent (2) or a portion thereof, after substantial solidification, shows an adhesive effect, whether or not after this agent or the respective portion thereof has been activated and **in that** said self-leveling agent (2) shows said adhesive effect at least at the surface (4) thereof, whether or not after said activation of this surface (4).

2. Method according to claim 1, **characterized in that**, when said self-leveling agent (2) substantially is solidified, this agent, at least at the surface (4) thereof, shows a not-adhering layer (9), which must be activated or degraded in order to obtain said adhesive effect.

3. Method according to claim 1 or 2, **characterized in that** said spread self-leveling agent (2), after having solidified substantially, comprises, at least at the surface (4) thereof, at least one component of an adhesive agent system consisting of several components.

4. Method according to claim 2, **characterized in that** said activation consists at least **in that** at least one of said several components is brought into contact with said surface (4).

5. Method according to claim 3, **characterized in that** said floor covering (10) at the underside (12) thereof is provided with at least one of said several components, such that said activation occurs at least partially during the installation of the floor covering (10) itself.

6. Method according to claim 4 or 5, **characterized in that** at least one of said several components is provided separately on said surface (4) of the spread self-leveling agent (2), such that said activation occurs at least partially prior to the installation of the floor covering (10) itself.

7. Method according to any of the preceding claims, **characterized in that** said activation is performed at least partially after the respective portion of the floor covering (10) already has been provided on the spread and substantially solidified self-leveling agent (2).

8. Method according to claim 7, **characterized in that** said activation is performed at least partially by post-treating the installed floor covering (10) by heat or electro-magnetic radiation.

9. Method according to any of the preceding claims, **characterized in that** it is applied for installing a floor covering (10) consisting of hard floor panels (11-11A).

10. Method according to claim 9, **characterized in that** said hard floor panels (11-11A) are made rectangular and are provided at least at two opposite edges (14-15) with coupling means (16) and wherein the method comprises at least the step of interconnecting, by means of these coupling means (16), at least two of such floor panels (11-11A).

11. Agent for treating an underlying surface, wherein this agent (2), when it is spread on the underlying surface (1) concerned, shows a self-leveling effect, **characterized in that** said agent (2) comprises one or more components of an adhesive agent system, wherein this adhesive agent system allows obtaining at least an adhesive effect at the surface (4) of the spread agent (2), after the agent (2) concerned substantially is solidified.

12. Agent according to claim 11, **characterized in that** said adhesive agent system consists of several components, wherein at least one component lacks in said agent (2) or is present therein in an insufficient amount, such that said adhesive effect would be created or would be sufficiently large for connecting a floor covering (10) to the treated underlying surface.

13. Agent according to claim 11 or 12, **characterized in that** the agent (2) comprises 10 to 50 weight percent of fillers selected from the series of gypsum, cement and putty.

14. Agent according to any of the claims 11 to 13, **characterized in that** the agent (2) comprises an adhesive or a component of an adhesive agent system on the basis of methacrylate esters, urethane, methacrylate, epoxy or cyanoacrylate.

## Patentansprüche

1. Verfahren zum Verlegen eines Fußbodenbelags, wobei dieser Fußbodenbelag (10) mit einem Untergrund (1) verbunden wird und wobei dieses Verfahren mindestens die Schritte (S1-S2) umfasst des Vorbereitens des Untergrunds (1) mindestens durch das darauf Ausbreiten eines selbstnivellierenden Mittels (2) und des Verwirklichens einer Verbindung zwischen dem nivellierten Untergrund (1) und dem betreffenden Fußbodenbelag (10), nachdem das besagte Mittel (2) im Wesentlichen ausgehärtet ist, **dadurch gekennzeichnet, dass** besagte Verbindung mindestens mittels des ausgebreiteten selbstnivellierenden Mittels (2) selbst entsteht, dadurch, dass dieses Mittel (2) oder ein Teil davon, nach hauptsächlicher Aushärtung, eine Klebewirkung aufweist, entweder nachdem dieses Mittel oder der entsprechende Teil davon aktiviert wurde oder nicht, und dadurch, dass besagtes selbstnivellierendes Mittel (2) besagte Klebewirkung mindestens an seiner Oberfläche (4) aufweist, entweder nach besagter Aktivierung dieser Oberfläche (4) oder nicht.

2. Verfahren nach Anspruch 1, **dadurch gekennzeichnet, dass**, wenn besagtes selbstnivellierendes Mittel (2) im Wesentlichen ausgehärtet ist, dieses Mittel, mindestens an seiner Oberfläche (4), eine nicht klebende Lage (9) aufweist, die aktiviert oder abgebaut werden muss, um besagte Klebewirkung zu erzielen.

3. Verfahren nach Anspruch 1 oder 2, **dadurch gekennzeichnet, dass** besagtes ausgebreitetes selbstnivellierendes Mittel (2), nachdem es im Wesentlichen ausgehärtet ist, mindestens an seiner Oberfläche (4) mindestens eine Komponente eines aus mehreren Komponenten bestehenden Klebemittelsystems umfasst.

4. Verfahren nach Anspruch 2, **dadurch gekennzeichnet, dass** besagte Aktivierung mindestens daraus besteht, dass mindestens eine der besagten mehreren Komponenten mit besagter Oberfläche (4) in Kontakt gebracht wird.

5. Verfahren nach Anspruch 3, **dadurch gekennzeichnet, dass** besagter Fußbodenbelag (10) an seiner Unterseite (12) mit mindestens einer der besagten mehreren Komponenten versehen ist, sodass besagte Aktivierung mindestens teilweise während des Verlegens des Fußbodenbelags (10) selbst stattfindet.

6. Verfahren nach Anspruch 4 oder 5, **dadurch gekennzeichnet, dass** mindestens eine der besagten mehreren Komponenten separat auf besagter Oberfläche (4) des ausgebreiteten selbstnivellierenden Mittels (2) angebracht wird, sodass besagte Aktivierung mindestens teilweise vor dem Verlegen des Fußbodenbelags (10) selbst stattfindet.

7. Verfahren nach einem der vorgenannten Ansprüche, **dadurch gekennzeichnet, dass** besagte Aktivierung mindestens teilweise durchgeführt wird, nachdem der betreffende Teil des Fußbodenbelags (10) bereits auf dem ausgebreiteten und im Wesentlichen ausgehärteten selbstnivellierenden Mittel (2) angebracht worden ist.

8. Verfahren nach Anspruch 7, **dadurch gekennzeichnet, dass** besagte Aktivierung mindestens teilweise durch Nachbehandeln des verlegten Fußbodenbelags (10) durch Wärme oder elektromagnetische Strahlung durchgeführt wird.

9. Verfahren nach einem der vorgenannten Ansprüche, **dadurch gekennzeichnet, dass** es zum Verlegen eines aus harten Fußbodenpaneelen (11-11A) bestehenden Fußbodenbelags (10) angewendet wird.

10. Verfahren nach Anspruch 9, **dadurch gekennzeichnet, dass** besagte harte Fußbodenpaneele (11-11A) rechteckig ausgeführt sind und an mindestens zwei gegenüberliegenden Rändern (14-15) mit Koppelmitteln (16) versehen sind, und wobei das Verfahren mindestens den Schritt des anhand dieser Koppelmittel (16) miteinander Verbindens von mindestens zwei solchen Fußbodenpaneelen (11-11A) umfasst.

11. Mittel zur Behandlung eines Untergrunds, wobei dieses Mittel (2), wenn es auf dem betreffenden Untergrund (1) ausgebreitet wird, eine selbstnivellierende Wirkung aufweist, **dadurch gekennzeichnet, dass** besagtes Mittel (2) eine oder mehrere Komponenten eines Klebemittelsystems umfasst, wobei dieses Klebemittelsystem gestattet, mindestens eine Klebewirkung an der Oberfläche (4) des ausgebreiteten Mittels (2) zu erhalten, nachdem das betreffende Mittel (2) im Wesentlichen ausgehärtet ist.

12. Mittel nach Anspruch 11, **dadurch gekennzeichnet, dass** besagtes Klebemittelsystem aus mehreren Komponenten besteht, wobei mindestens eine Komponente in besagtem Mittel (2) fehlt oder in einer ungenügenden Menge darin vorhanden ist, um besagte Klebewirkung entstehen zu lassen oder groß genug sein zu lassen, um einen Fußbodenbelag (10) mit dem behandelten Untergrund zu verbinden.

13. Mittel nach Anspruch 11 oder 12, **dadurch gekennzeichnet, dass** das Mittel (2) 10 bis 50 Gewichtsprozent Füllstoffe umfasst, ausgewählt aus der Gruppe von Gips, Zement und Kitt.

14. Mittel nach einem der Ansprüche 11 bis 13, **dadurch gekennzeichnet, dass** das Mittel (2) einen Klebstoff oder eine Komponente eines Klebemittelsystems auf Basis von Methacrylatestern, Urethan, Methacrylat, Epoxy oder Cyanoacrylat umfasst.

## Revendications

1. Procédé pour installer un revêtement de sol, dans lequel ce revêtement de sol (10) est relié à une surface sous-jacente (1) et dans lequel ce procédé comprend au moins les étapes (S1-S2) de préparation de la surface sous-jacente (1) au moins en étalant par-dessus un agent autolissant (2) et de réalisation d'une liaison entre la surface sous-jacente lissée (1) et le revêtement de sol (10) concerné après la solidification substantielle dudit agent (2), **caractérisé en ce qu'**on obtient ladite liaison au moins par l'intermédiaire de l'agent autolissant étalé (2) lui-même, **en ce que** cet agent (2) ou une portion de ce dernier, après solidification substantielle, présente un effet adhésif après l'activation ou non de cet agent ou de sa portion respective, et **en ce que** ledit agent autolissant (2) présente ledit effet adhésif au moins à sa surface (4) après ladite activation ou non de cette surface (4).

2. Procédé selon la revendication 1, **caractérisé en ce que**, après la solidification substantielle dudit agent autolissant (2), cet agent, au moins à sa surface (4), présente une couche non adhérente (9) qui doit être activée ou dégradée afin d'obtenir ledit effet adhésif.

3. Procédé selon la revendication 1 ou 2, **caractérisé en ce que** ledit agent autolissant étalé (2), après sa solidification substantielle, comprend, au moins à sa surface (4), au moins un composant d'un système d'agents adhésifs constitué par plusieurs composants.

4. Procédé selon la revendication 2, **caractérisé en ce que** ladite activation consiste au moins **en ce qu'**on amène au moins un desdits plusieurs composants en contact avec ladite surface (4).

5. Procédé selon la revendication 3, **caractérisé en ce que** ledit revêtement de sol (10) est muni, sur son côté inférieur (12), d'au moins un desdits plusieurs composants, de telle sorte que l'on obtient ladite activation au moins en partie lors de l'installation du revêtement de sol (10) lui-même.

6. Procédé selon la revendication 4 ou 5, **caractérisé en ce qu'**on procure au moins un desdits plusieurs composants de manière séparée sur ladite surface (4) de l'agent autolissant étalé (2) de telle sorte que l'on obtient ladite activation au moins en partie avant l'installation du revêtement de sol (10) lui-même.

7. Procédé selon l'une quelconque des revendications précédentes, **caractérisé en ce que** ladite activation est mise en oeuvre au moins en partie une fois que la portion respective du revêtement de sol (10) a déjà été prévue sur l'agent autolissant (2) étalé et essentiellement solidifié.

8. Procédé selon la revendication 7, **caractérisé en ce que** ladite activation est mise en oeuvre au moins en partie en soumettant le revêtement de sol installé (10) à un traitement ultérieur en utilisant de la chaleur ou un rayonnement électromagnétique.

9. Procédé selon l'une quelconque des revendications précédentes, **caractérisé en ce qu'**il est appliqué pour l'installation de revêtements de sol (10) constitués par des panneaux de sol durs (11-11A).

10. Procédé selon la revendication 9, **caractérisé en ce que** lesdits panneaux de sol durs (11-11A) sont de configuration rectangulaire et sont munis, au moins à deux bords opposés (14-15) de moyens de couplage (16), et dans lequel le procédé comprend au moins l'étape consistant à interconnecter, à l'aide de ces moyens de couplage (16), au moins deux desdits panneaux de sol (11-11A).

11. Agent pour traiter une surface sous-jacente, dans lequel cet agent (2), lorsqu'il est étalé sur la surface sous-jacente (1) concernée, présente un effet autolissant, **caractérisé en ce que** ledit agent (2) comprend un ou plusieurs composants d'un système d'agents adhésifs, ce système d'agents adhésifs permettant d'obtenir au moins un effet adhésif à la surface (4) de l'agent étalé (2) après la solidification substantielle de l'agent (2) concerné.

12. Agent selon la revendication 11, **caractérisé en ce que** ledit système d'agents adhésifs est constitué par plusieurs composants, au moins un composant n'étant pas présent dans ledit agent (2) ou y étant présent en une quantité insuffisante de façon à créer ledit effet adhésif ou à obtenir un effet adhésif suffisamment important pour relier un revêtement de sol (10) à la surface sous-jacente traitée.

13. Agent selon la revendication 11 ou 12, **caractérisé en ce que** l'agent (2) comprend, à concurrence de 10 à 50 % en poids, des matières de charge choisies parmi le groupe comprenant du gypse, du ciment et du mastic.

14. Agent selon l'une quelconque des revendications 11 à 13, **caractérisé en ce que** l'agent (2) comprend un adhésif ou un composant d'un système d'agents adhésifs à base d'esters méthacryliques, d'uréthanes, de méthacrylates, de composés époxy ou de cyanoacrylates.
